# EUROPEAN PATENT SPECIFICATION

(11) **EP 3 804 930 B1**
(45) Date of publication and mention of the grant of the patent: **03.05.2023**
(21) Application number: 20196380.8
(22) Date of filing: 16.09.2020
(51) Int. Cl.: B27M 1/08, B23Q 7/04

(54) **WORKING CENTRE COMPRISING A LOADING AND UNLOADING WORKPIECES SYSTEM, LOADING AND UNLOADING WORKPIECES SYSTEM AND OPERATION METHOD THEREOF**
BEARBEITUNGSCENTER MIT BE- UND ENTLADESYSTEM FÜR WERKSTÜCKE, BE- UND ENTLADESYSTEM FÜR WERKSTÜCKE UND ZUGEHÖRIGES VERFAHREN ZU DESSEN BETRIEB
POSTE DE TRAVAIL COMPRENANT UN SYSTÈME DE CHARGEMENT ET DE DÉCHARGEMENT DES PIÈCES, SYSTÈME DE CHARGEMENT ET DÉCHARGEMENT DES PIÈCES ET MÉTHODE D'UTILISATION CORRESPONDANTE.

(30) Priority: 10.10.2019 IT 201900018485
(43) Date of publication of application: 14.04.2021
(73) Proprietor: SCM Group S.p.A., 47921 Rimini (RN) (IT)
(72) Inventor: MAZZA, Michele, 47921 RIMINI (RN) (IT); BAGGIARINI, Elia, 47921 RIMINI (RN) (IT)
(74) Representative: Tiburzi, Andrea

(56) References cited:
- WO-A2-2018/073310
- DE-A1-102010 024 321
- DE-A1-102017 208 212
- DE-B3-102005 020 119

## Description

The present invention relates to a working center comprising a system for loading and unloading workpieces in a working center for workpieces, in particular for wooden panels.

The present invention also relates to a system for loading and unloading pieces in a working center for wooden workpieces.

The present invention also relates to an operating method of said working center.

More in detail, the invention relates to a working center of the above type, designed and manufactured in particular for machining panels made of wood, plastic, metal, glass, fiberglass, ceramic, and the like, comprising a system for loading the panels to be machined and unloading machined panels.

In the following, the description will be directed to a working center configured for a pendulum machining, i.e. in which there are two areas, each capable of operating alternately, both as a workpiece loading station and as a workpiece machining station, alternating such functionality, but it is clear that the invention should not be limited to this specific machining.

As is well known, currently a working center for working wooden panels comprises a working surface for resting the panels to be machined, a crosspiece movable along said working surface, which supports at least one working tool.

Working centers of the known type can be fed manually or automatically.

In the working centers with manual feeding, there is an operator to load the panels to be machined on the working plane from a magazine or a storage area, and unload the processed panels from the working plane.

As is evident, in manual processing centers the panels loading and unloading times depend on the operator's efficiency.

Furthermore, it is possible that during the loading phase, the operator is not accurate in approaching the panels to the reference means, causing a subsequent machining error.

In automatic working centers, the loading and unloading of panels take place by means of devices external to the working center, such as robots, which have high costs, or by means of devices integrated in the working center itself, which however require downtime machine for carrying out loading and unloading operations, or which carry out loading and unloading operations only in one area of the working center and have a very complex structure as they must cover very large areas of the working center.

The relevant prior art also includes patent applications WO 2018/073310 A2, which discloses the preamble of claim 1, DE 102017208212 A1, DE 102010024321 A1, and DE 102020024321 A1.

In light of the above, it is therefore an object of the present invention to provide a panel working center comprising an automatic loading and unloading system, which therefore allows a reduction in the panels loading and unloading times.

A further object of the present invention is to provide a panel working center comprising a loading and unloading system integrated in the working center, which does not require machine downtime to perform the loading and unloading operations.

A further object of the invention is to provide a loading and unloading system which has the above advantages and which has a compact structure so as to take up little space both during the loading and unloading of the panels and during their transport.

It is therefore specific object of the present invention a working center for working at least one panel, made of wood, plastic, metal, ceramic, fiberglass, glass and the like, comprising a working plane extending along a first direction to support said at least one panel, a working unit movable along said working plane, capable of supporting at least one working tool for working said at least one panel, a loading and unloading system, capable of loading said at least one panel in said working center and of unloading said panel from said working center, said working center being characterized in that said loading and unloading system comprises a base extending along said first direction, parallel to said working plane, and a picking up device of said panel movable with respect to said base either along said first direction or along a second direction, orthogonal to said first direction, said base and said picking up device being configured each other in such a way that said loading and unloading system is capable of reaching all the areas of said working plane which are not occupied by said working unit, during the working of said panel by said working unit.

Further according to the invention, said base occupies a space immediately adjacent to said working plane, in order to occupy a portion of the area swept by said working unit during the movement along said working plane.

According to the invention, said loading and unloading system further comprises a slide capable of translating along said base along said first direction.

Still according to the invention, said loading and unloading system further comprises a vertical rod extending along a third direction, orthogonal with respect to said working plane, slidably coupled with said slide and capable of moving along said second direction.

Always according to the invention, said picking up device is slidably and rotatably coupled with said vertical rod.

Further according to the invention, said picking up device comprises a telescopic arm capable of arranging itself along an axis parallel to said development axis of said vertical rod, and said picking up device comprises a picking up member, coupled with said telescopic arm, capable of holding said panel during the arrangement of said telescopic arm along said axis parallel to said development axis of said vertical rod.

It is further object of the present invention a loading and unloading system and an operation method of the working center like set out in the appended set of claims.
figure 1 shows a top perspective view of the working center comprising a system for loading and unloading workpieces, object of the present invention;
figure 2 shows a top view of the working center shown in figure 1;
figure 3 shows a perspective view of the piece loading and unloading system comprised in the working center shown in figure 1;
figure 4 shows a side view of the piece loading and unloading system shown in figure 3;
figure 5 shows a further perspective view of the workpiece loading and unloading system shown in figure 3;
figure 6 shows a bottom view of a component of the workpiece loading and unloading system shown in figure 3;
figure 7 shows a top perspective view of a portion of the component shown in figure 6;
figure 8 shows a bottom view of the portion of the component shown in figure 7;
figure 9 shows a perspective view of the piece loading and unloading system shown in figure 3, in a functioning operational step;
figure 10 shows a perspective view of the piece loading and unloading system shown in figure 3, in a further functioning operational step;
figure 11 shows a top view of the working center shown in figure 1, in an operating step of the loading and unloading system;
figure 12 shows a perspective view of the working center, in the operating step of the loading and unloading system shown in figure 11;
figure 13 shows a perspective view of the working center, in a further one in the operating step of the loading and unloading system; and
figure 14 shows a top view of the working center, in the operating step of the loading and unloading system shown in figure 13.

In the various figures, similar parts will be indicated by the same reference numbers.

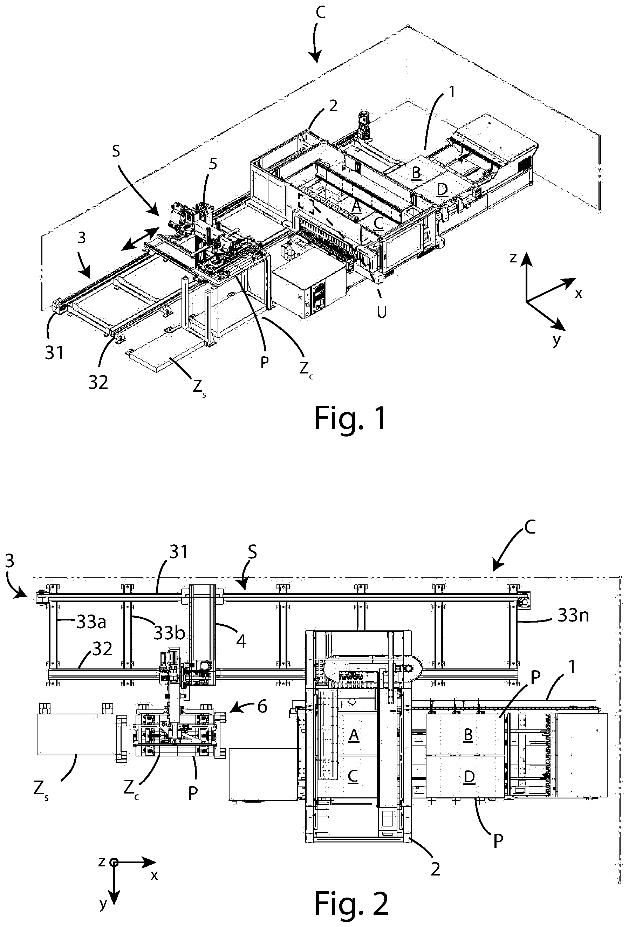

With reference to figures 1 and 2, said working center C for machining pieces P, in particular panels made of wood, plastic, metal, fiberglass, glass, ceramic and the like, object of the present invention comprises a working plane 1 for supporting said panels P to be worked, a working unit or crosspiece 2, movable along said working plane 1, a loading and unloading system S of said panels P on said working plane 1, and a logic control unit U.

Said working plane 1 has an elongated shape according to an axis of development, parallel to the reference axis X of the Cartesian reference system XYZ and its predominant dimension is the length.

Said working plane 1 comprises some ideal areas, in which the loading and unloading of the panel P take place by said loading and unloading system S, in particular, four areas A, B, C, and D are identified, the function of which will be described in detail below.

Said working unit 2 translates along said working plane 1, in particular along said X-axis.

Said working unit 2 is configured to translate in one direction of the X-axis and in the opposite direction, according to the machining program of said panel P contained in said logic control unit C, thus defining a known "pendulum" working.

The area occupied by said working unit 2 during the translation along said working plane 1 is defined as the area swept by the working unit 2.

Said working unit 2 comprises machining tools for carrying out the machining on said panel P.

During the processing of the panel P, said processing unit 2 can occupy all the ideal areas A, B, C, and D of said working plane 1.

Furthermore, in said working center C, there are loading and unloading areas for said panels P.

In particular, the panels P to be processed are stored in the loading area Z_{c} and are picked up by said loading and unloading system S, and loaded onto said working plane 1.

In the unloading area Zₛ the already processed panels P are stored, which are picked up by said loading and unloading system S from said working plane 1 and placed in said unloading area Zₛ.

Both in the loading area Z_{c} and in the unloading area Zₛ, there are containment means for said panels P, to keep them stacked and also to act as abutment means during the removal of the panel P, as will be described below.

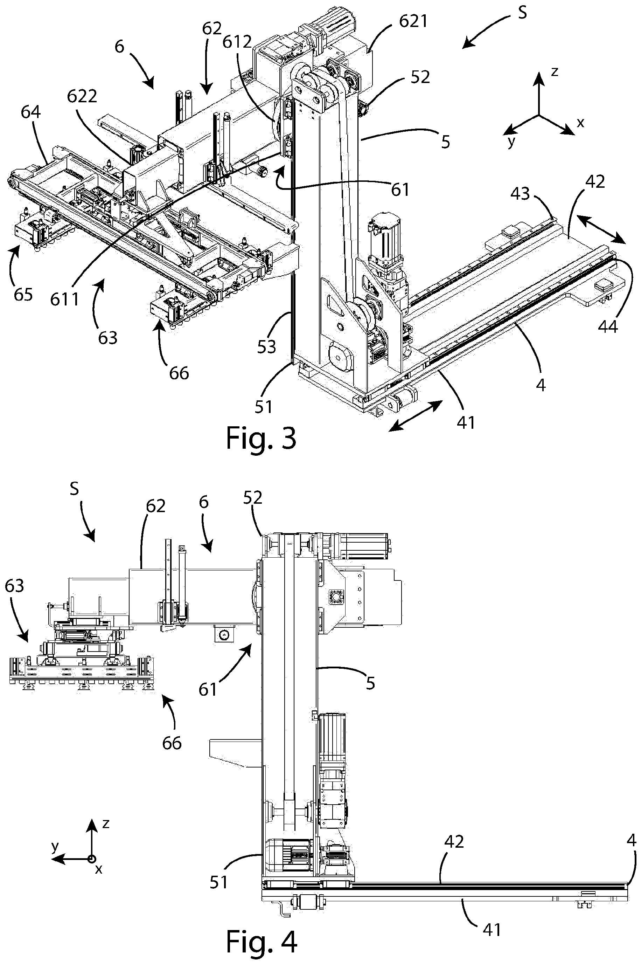

Referring now to figures 3-5, said loading and unloading system S essentially comprises a base 3, a slide 4, slidingly coupled to said base 3, a vertical rod 5, slidingly coupled to said slide 4, and a picking up device 6 coupled to said vertical rod 5.

In particular, said base 3 is fixed to the supporting ground of said working center C, develops along an axis parallel to said X-axis, and is therefore arranged parallel to said working plane 1.

Said base 3 occupies a space immediately adjacent to said working plane 1 itself, so as to occupy a portion of the area swept by said processing unit 2.

Therefore, when said working unit 2 translates along said working plane 1, it passes freely over said base 3.

Said base 3 comprises a first arrangement of linear guides, in particular a first guide 31, and a second guide 32 joined together by a plurality of crosspieces 33ₐ, 33_{b},..., 33ₖ, 33ₙ.

Said slide 4 comprises a lower face 41 and an upper face 42.

Said lower face 41 is slidingly coupled to said base 3 by means of movement means of pinion and rack, or pulley and belt, or other known means types.

Said slide 4 is therefore capable of translating on said first 31 and second 32 guides along the X-axis, in one direction and in the opposite direction, from said loading zone Z_{c} and unloading zone Zₛ towards said ideal areas A, B, C, and D of said working plane 1 and vice versa.

Said upper face 42, in turn, comprises a second arrangement of linear guides, in particular, a third guide 43 and a fourth guide 44, to allow the movement of said vertical rod 5.

Said vertical rod 5 develops mainly along an axis parallel to the Z-axis of the Cartesian reference system XYZ and is provided with a first end 51 and a second end 52.

Said first end 51 is slidingly coupled to said slide 4, in particular, to said third 43 and fourth 44 guide, by means of movement means of the pinion and rack type, or similar known means.

Said vertical rod 5 is, therefore, able to translate on said third 43 and fourth 44 guides along the Y-axis of the Cartesian reference system XYZ, in one direction and in the opposite direction, moving away from and approaching said working plane 1.

Said vertical rod 5 comprises a third arrangement of linear guides arranged on one of its faces, in particular a fifth 53 and a sixth 54 guide to allow the movement of said picking up device 6.

Said picking up device 6 comprises coupling means 61 with said vertical rod 5, a telescopic arm 62, and a picking up member 63, coupled to said telescopic arm 62.

In particular, said coupling means 61 comprise a plate 611 movable along said fifth 53 and sixth 54 guides according to an axis parallel to the Z-axis, in one direction and in the opposite direction, from said first end 51 of said vertical rod 5 towards said second end 52 of said vertical rod 5 and vice versa.

Said plate 61 is coupled to said fifth 53 and sixth 54 guides by means of a flat belt.

With reference in particular to figure 3, said telescopic arm 62 comprises an external portion 621 and an internal portion 622, slidingly coupled to said external portion 621, and able to slide within it.

Said internal portion 622 is able to slide along a direction parallel to the Y-axis, in one direction and in the opposite direction, to pass from a retracted position, in which it is completely contained in said external portion 621, to an extracted position, in the which is completely out from said external portion 621.

In said retracted position, said telescopic arm 62 has a minimum length, while in said extracted position, said telescopic arm reaches its maximum length and is therefore completely open.

Said outer portion 621 is rotatably coupled to said plate 61 by means of a fifth wheel 612 and a pinion 613.

Therefore, said telescopic arm 62 is capable of rotating by an angle of 90° from a first position, in which it is arranged along a direction parallel to the Y-axis, therefore orthogonal to the development axis of said vertical rod 5, to a second position, in which it is arranged along a direction parallel to the Z-axis, therefore parallel to the development axis of said vertical rod 5.

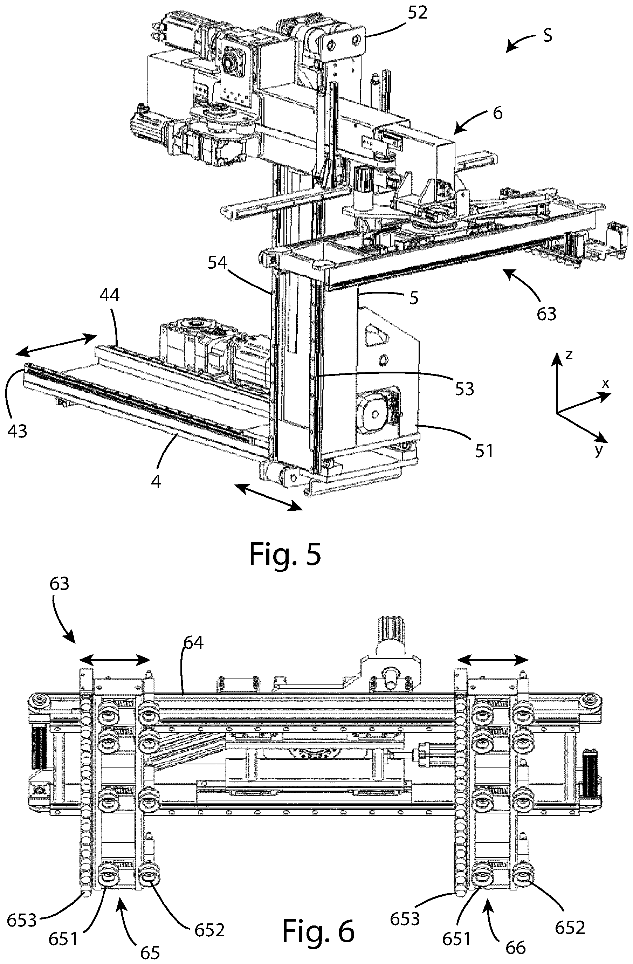

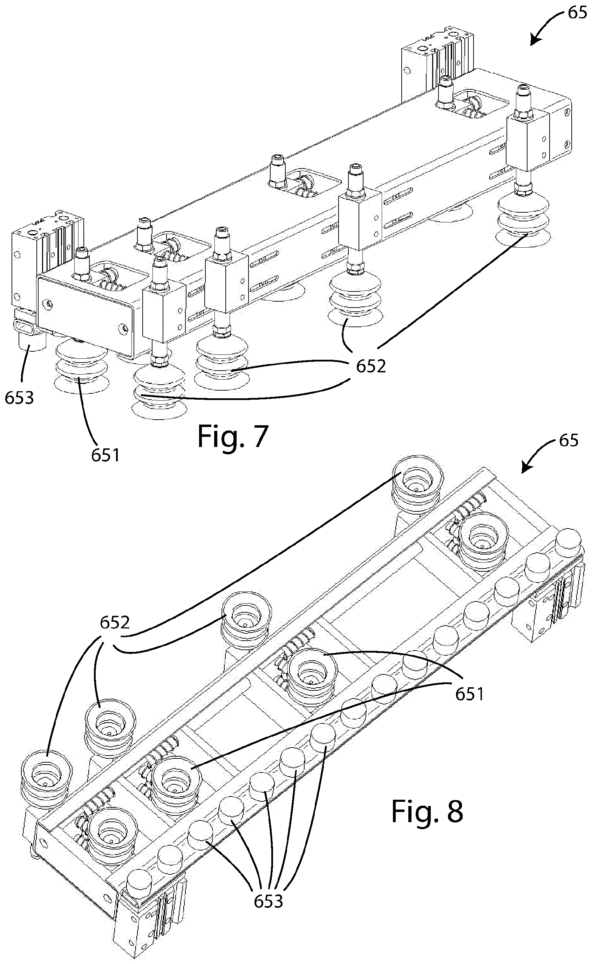

With reference now to figures 6-8, a picking up member 63 is coupled to one end of said inner portion 622 of said telescopic arm 62.

Said picking up member 63 essentially comprises a supporting structure 64, to which a first 65 and a second 66 picking up elements are slidingly coupled.

Each picking up element 65 and 66 is individually motorized, for example by independent stepper motors, so that they can be arranged on said supporting structure 64 in a suitable way for picking up panels P of different sizes.

Since said first 65 and second 66 picking up elements are identically structured, for ease of reading the first picking up element 65 will be described and it is to be understood that the same description also relates to said second picking up element 66.

Said picking up element 65 essentially comprises a first plurality of suction cups 651, a second plurality of suction cups 652, and a pressure element 653.

Each of said first plurality of suction cups 651 is passively movable according to a direction parallel to the X-axis and according to a direction parallel to the Y-axis, due to the effect of the dragging, consequent to the picking up of the panel P, as will be described below.

Furthermore, said first plurality of suction cups 651 is fed by a vacuum system, which allows the panel P to be held still after it has been picked up.

Said second plurality of suction cups 652 is fixed and is fed by said vacuum system to hold said panel P still after being picked up by said first plurality of suction cups 651.

Said pressure element 653 is capable of detaching said panel P from said second plurality of suction cups to release it in an area A, B, C, or D of said working plane 1, according to the machining to be performed.

The operation of the working center C described above is as follows.

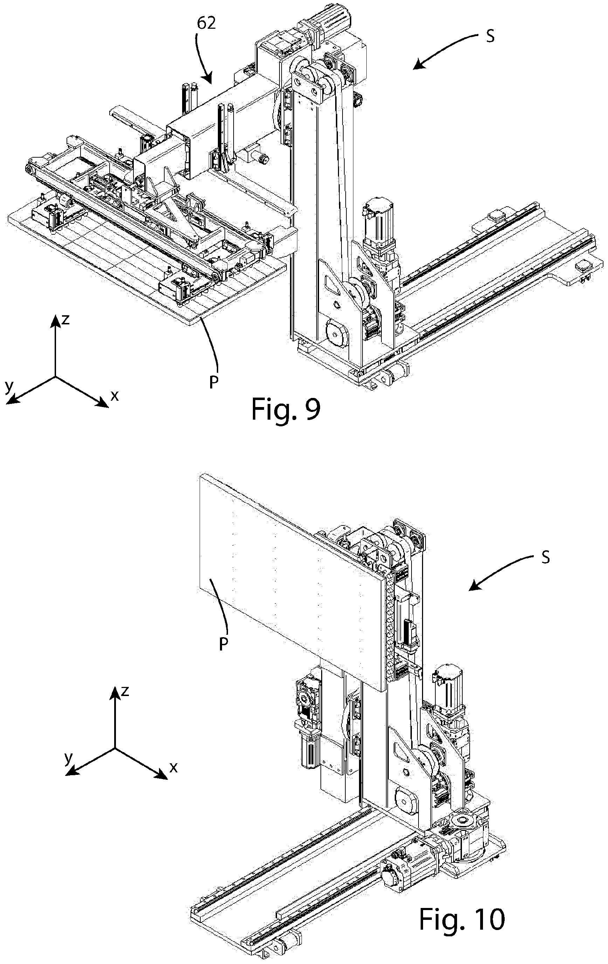

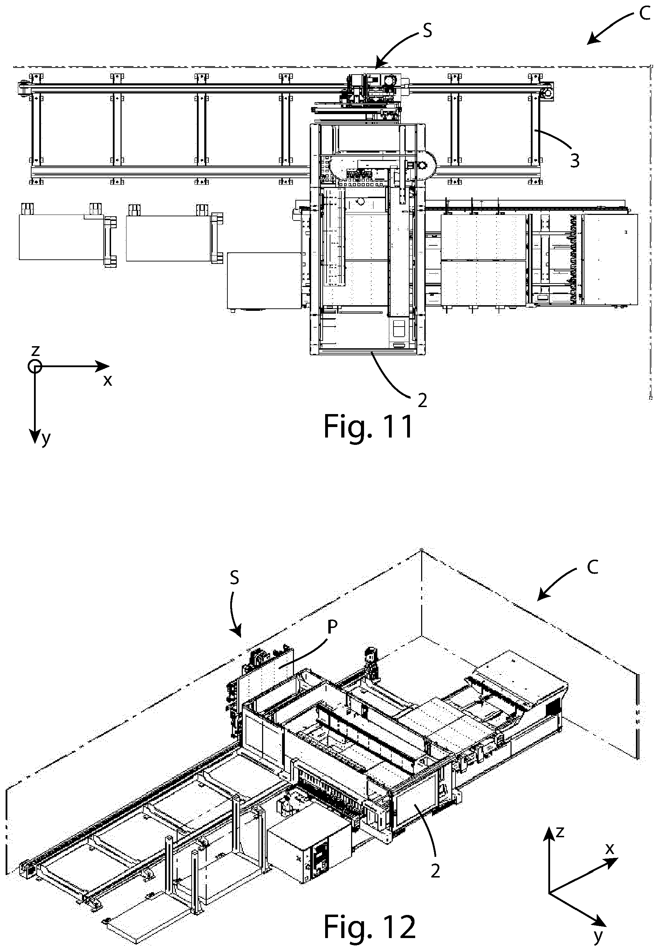

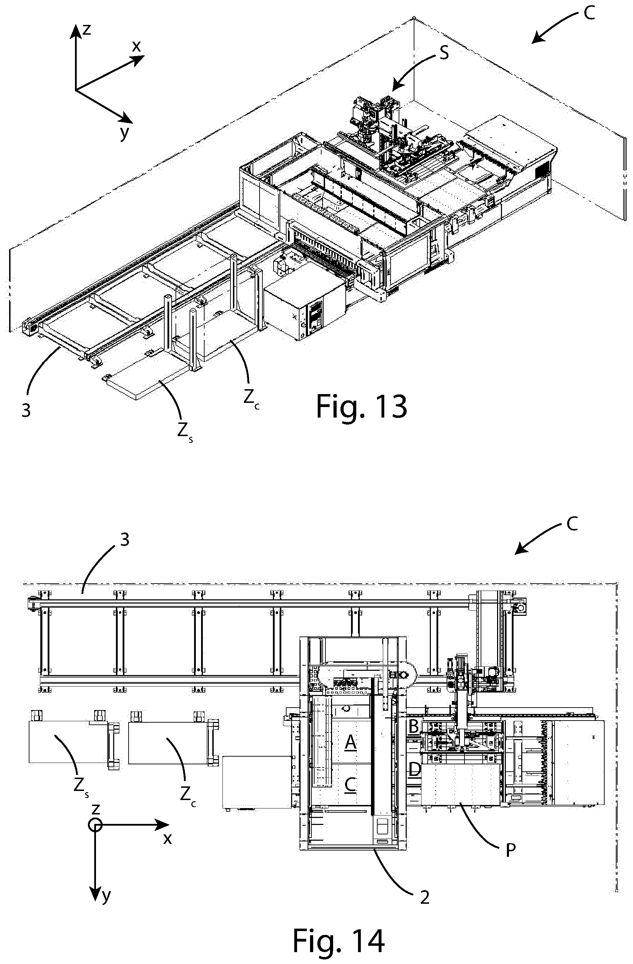

With reference to figures 9-14, when it is desired to perform processing on a panel P deposited in said loading area Z_{c}, said loading and unloading system S must pick up the panel P and unload it on said working plane 1 of said working center C, in an area A, B, C, or D.

Said slide 4 slides on said base 3 according to a direction parallel to the X-axis. Based on the current positioning of said system S in said working center C, said vertical rod 5 slides on said slide 4 in a direction parallel to the Y-axis, to approach said loading area Z_{c}, to pick up said panel P.

Said picking up device 6 faces said panel P, which lies in said loading zone Z_{c} in a plane parallel to the ground.

Said first plurality of suction cups 651 is fed by the vacuum system and picks up a panel P. Following the removal of panel P, said picking up device 6 abuts the panel P against the abutment means of the loading area Z_{c} and therefore, each of said suction cups 651 undergoes a passive movement to adapt its position to the approach of the panel P.

Once the approach is complete, said first plurality of suction cups 651 is no longer fed by the vacuum system, while said second plurality of suction cups 652 is fed and therefore can pick up the panel P in the squaring position. As the suction cups 652 are fixed, the squaring position is maintained throughout the movement of the panel P.

Once the panel P has been picked up, said slide 4 moves along a direction parallel to the X-axis, towards said working unit 2.

Upon reaching said processing unit 2, said telescopic arm 62 rotates around said vertical rod 5 and is arranged along a direction parallel to the Z-axis, as shown in figure 10, so that said panel P lies in a plane parallel to the XZ plane.

In this position, said picking up device 6 can freely pass next to said processing unit 2, without interrupting its operation.

In fact, said slide 4 continues to translate along a direction parallel to the X-axis on said base 3, said vertical rod 5 translates on said slide 4 along a direction parallel to the Y-axis, away from said working plane 1, in the negative direction of the Y-axis, so that said panel P can pass next to said processing unit 2, being arranged in a plane parallel to the XZ plane.

At the same time, said working unit 2 can continue machining on another panel P which is being machined in said working center C.

According to the position A, B, C, or D of the working plane 1, on which said panel P has to be deposited, said slide 4 continues to translate along an axis parallel to the X-axis, and said vertical rod 5 moves along a direction parallel to the Y-axis, in the positive direction of the Y-axis, to approach said working plane 1.

Said telescopic arm 62 rotates again around said vertical rod 5 and returns to a parallel position with respect to the ground.

Furthermore, said telescopic arm 62 moves from said first position towards said second position, so that said panel P faces said working plane 1, and so that said picking up member 63 can deposit the panel P in the predefined position of the working plane 1.

Once the predefined position has been reached, the panel P is placed on said working plane 1, the pressure element 653 pushes the panel P towards the working plane 1, and the vacuum system is deactivated.

Following the processing of said panel P by said processing unit 2, said picking up device can pick up the panel P and bring it back to said unloading area Zₛ, following the reverse movements to those just described.

As is apparent from the above description, the working center C object of the present invention allows to carry out the loading and unloading of panels P on and from said working plane 1, by means of said loading and unloading system S, in an automatic, simple way and simultaneously with the machining of said panel P by said processing unit 2, without interference between said loading and unloading system S and said processing unit 2.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Working center (C) for working at least one panel (P), made of wood, plastic, metal, ceramic, fiberglass, glass, comprising
a working plane (1) extending along a first direction (X) to support said at least one panel (P),
a working unit (2) movable along said working plane (1), capable of supporting at least one working tool for working said at least one panel (P),
a loading and unloading system (S), capable of loading said at least one panel (P) in said working center (C) and of unloading said panel (P) from said working center (C),
said loading and unloading system (S) comprising
a base (3) extending along said first direction (X), parallel to said working plane (1), and
a picking up device (6) of said panel (P) movable with respect to said base (3) either along said first direction (X) or along a second direction (Y), orthogonal to said first direction (X),
said base (3) and said picking up device (6) being configured each other in such a way that said loading and unloading system (S) is capable of reaching all the areas of said working plane (1) which are not occupied by said working unit (2), during the working of said panel (P) by said working unit (2), said working center (C) being **characterized**
**in that** said loading and unloading system (S) further comprises a slide (4) capable of translating along said base (3) along said first direction (X), and
**in that** said loading and unloading system (S) further comprises a vertical rod (5) extending along a third direction (Z), orthogonal with respect to said working plane (1), slidably coupled with said slide (4) and capable of moving along said second direction (Y).

2. Working center (C) according to the preceding claim, **characterized in that** said base (3) occupies a space immediately adjacent to said working plane (1), in order to occupy a portion of the area swept by said working unit (2) during the movement along said working plane (1).

3. Working center (C) according to any one of the preceding claims, **characterized in that** said picking up device (6) is slidably and rotatably coupled with said vertical rod (5).

4. Working center (C) according to the preceding claim, **characterized**
**in that** said picking up device (6) comprises a telescopic arm (62) capable of arranging itself along an axis parallel to third direction (Z), and
**in that** said picking up device (6) comprises a picking up member (63), coupled with said telescopic arm (62), capable of holding said panel (P) during the arrangement of said telescopic arm (62) along said axis parallel to said development axis of said vertical rod (5).

5. Loading and unloading system (S), capable of loading at least one panel (P), made of wood, plastic, metal, ceramic, fiberglass, glass for a working center (C) and unloading said panel (P) from said working center (C), said working center (C) being of the type comprising a working plane (1) extending along a first direction (X) for supporting at least one panel (P), a working unit (2) movable along said working plane (1), capable of supporting at least one working tool for working said at least one panel (P), comprising a base (3) extending along said first direction (X), parallel to said working plane (1), a a picking up device (6) of said panel (P) movable with respect to said base (3) either along said first direction (X) or along a second direction (Y), orthogonal to said first direction (X) capable of loading and unloading said panel (P) on said working plane (1), said loading and unloading system (S) being characterized
that it comprises a slide (4) capable of moving said base (3) along said first direction (X), and
in that it comprises a vertical rod (5) which mainly develops along a third direction (Z), orthogonal with respect to said working plane (1), slidably coupled with said slide (4) and capable of translating along said second direction (Y).

6. System (S) according to the preceding claim, **characterized in that** said base (3) occupies a space immediately adjacent to said working plane (1), in order to occupy a portion of the area swept by said working unit (2) during the movement along said working plane (1).

7. System (S) according to the preceding claim, **characterized in that** said picking up device (6) is slidably and rotatable coupled with said vertical rod (5).

8. System (S) according to the preceding claim, **characterized**
**in that** said picking up device (6) comprises a telescopic arm (62) capable of arranging itself along an axis parallel to said development axis of said vertical rod (5), and
**in that** said picking up device (6) comprises a picking up member (63), coupled with said telescopic arm (62), capable of holding said panel (P) during the arrangement of said telescopic arm (62) along said axis parallel to said development axis of said vertical rod (5).

9. System (S) according to the preceding claim, **characterized in that** said picking up member (63) comprises
a supporting structure (64),
a first (65) and a second (66) picking up element slidably coupled with said supporting structure (64) approaching and moving away from each other.

10. System (S) according to the preceding claim, **characterized in that** each picking up element (65, 66) comprises
a first plurality of suction cups (651), capable of intercepting said panel (P) according to a predetermined orientation,
a second plurality of suction cups (652), capable of fixing said panel (P) after the picking up by said first plurality of suction cups (651), and
a pressure element (653), capable of detaching said panel (P) from said second plurality of suction cups (652).

11. Operation method of a working center (C), according to any one of claims 1-4 comprising a loading and unloading system (S), according to any one of claims 5-10, comprising the following steps:
a. providing said loading and unloading system (S) for picking up a panel (P) from said loading area (Z_{c}) of said working center (C), in which it is arranged on a picking up plane, parallel to the ground;
b. arranging said panel (P) along a plane perpendicular to said picking up plane;
c. moving said panel (P) towards said working plane (1) of said working center (C);
d. arranging said panel (P) along a plane parallel to the ground;
e. unloading said panel (P) on said working plane (1);
f. carrying out a working on said panel (P);
g. picking up said panel (P) from said working plane (1);
h. arranging said panel (P) along a plane perpendicular to said working plane (1);
i. moving said panel (P) towards said unloading area (Zₛ) of said working center (C);
j. arranging said panel (P) along a plane parallel to said picking up plane;
k. unloading said panel (P) in said unloading area (Zₛ) of said working center (C).

## Patentansprüche

1. Bearbeitungszentrum (C) zum Bearbeiten mindestens einer Platte (P), hergestellt aus Holz, Kunststoff, Metall, Keramik, Fiberglas, Glas, umfassend eine Arbeitsebene (1), die sich entlang einer ersten Richtung (X) erstreckt, um die besagte mindestens eine Platte (P) zu unterstützen, eine entlang der Arbeitsebene (1) bewegbare Arbeitseinheit (2), die in der Lage ist zum Stützen mindestens eines Bearbeitungswerkzeugs zum Bearbeiten der besagten mindestens einen Platte (P), ein Lade- und Entladesystem (S), das zumindest in der Lage ist, die besagte mindestens eine Platte (P) in das Bearbeitungszentrum (C) zu laden, und zum Entladen der besagten Platte (P) aus dem besagten Arbeitszentrum (C), wobei das besagte Lade- und Entladesystem (S) umfasst eine Basis (3), die sich entlang der besagten ersten Richtung (X) parallel zu der besagten Arbeitsebene (1) erstreckt, und eine Aufnahmevorrichtung (6) der besagten Platte (P), die in Bezug auf die besagte Basis (3) bewegbar ist, entweder entlang der besagten ersten Richtung (X) oder entlang einer zweiten Richtung (Y), orthogonal zu der besagten ersten Richtung (X), wobei die besagte Basis (3) und die besagte Aufnahmevorrichtung (6) zueinander derart konfiguriert sind, dass das besagte Lade- und Entladesystem (S) in der Lage ist, alle Bereiche der besagten Arbeitsebene (1) zu erreichen, die nicht durch die besagte Bearbeitungseinheit (2) besetzt sind, während der Bearbeitung der besagten Platte (P) durch die besagte Bearbeitungseinheit (2), wobei das Bearbeitungszentrum (C) **dadurch gekennzeichnet ist, dass** besagtes Lade- und Entladesystem (S) weiterhin einen Schlitten (4) umfasst, der entlang der besagten Basis (3) entlang der besagten ersten Richtung (X) verschoben werden kann, und dass besagtes Lade- und Entladesystem (S) weiterhin eine vertikale Stange (5) umfasst, die sich entlang einer dritten Richtung (Z) orthogonal in Bezug auf die besagte Arbeitsebene (1) erstreckt, verschiebbar mit dem besagten Schlitten (4) gekoppelt und in der Lage, sich entlang der besagten zweiten Richtung (Y) zu bewegen.

2. Bearbeitungszentrum (C) nach dem vorhergehenden Anspruch, **dadurch gekennzeichnet, dass** die besagte Basis (3) einen Raum unmittelbar neben der besagten Bearbeitungsebene (1) einnimmt, um einen Teil der von der besagten Arbeitseinheit überstrichenen Fläche (2) während der Bewegung entlang der besagten Arbeitsebene (1) zu besetzen.

3. Bearbeitungszentrum (C) nach einem der vorhergehenden Ansprüche, **dadurch gekennzeichnet, dass** die besagte Aufnahmevorrichtung (6) verschiebbar und drehbar mit der besagten vertikalen Stange (5) gekoppelt ist.

4. Bearbeitungszentrum (C) nach dem vorhergehenden Anspruch, **dadurch gekennzeichnet, dass** die besagte Aufnahmevorrichtung (6) einen Teleskoparm (62) umfasst, der in der Lage ist, sich selbst entlang einer Achse parallel zur dritten Richtung (Z) anzuordnen, und dass die besagte Aufnahmevorrichtung (6) einen Aufnahmeelement umfasst (63), gekoppelt mit dem besagten Teleskoparm (62), der in der Lage ist, die besagte Platte (P) während der Anordnung des besagten Teleskoparms (62) entlang der besagten Achse parallel zu der Entwicklungsachse der vertikalen Stange (5) festzuhalten.

5. Lade- und Entladesystem (S), das in der Lage ist, mindestens eine Platte (P) aus Holz, Kunststoff, Metall, Keramik, Fiberglas, Glas, in ein Bearbeitungszentrum (C) zu laden, und Entladen der besagten Platte (P) aus dem besagten Bearbeitungs-Zentrum (C), wobei das Bearbeitungszentrum (C) von der Art ist, die eine Bearbeitungsebene (1) umfasst, die sich entlang einer ersten Richtung (X) erstreckt, zum Unterstützen von mindestens einer Platte (P), eine entlang der besagten Arbeitsebene (1) bewegbare Arbeitseinheit (2), die in Lage ist, mindestens ein Bearbeitungswerkzeug zum Bearbeiten der besagten mindestens einen Platte (P) zu unterstützen, eine Basis (3) umfassend, die sich entlang der besagten ersten Richtung (X) parallel zu der besagten Arbeitsebene (1) erstreckt, eine Aufnahmevorrichtung (6) der besagten Platte (P), bewegbar in Bezug auf die besagte Basis (3) entweder entlang der besagten ersten Richtung (X) oder entlang einer zweiten Richtung (Y), orthogonal zu der besagten ersten Richtung (X), die in der Lage ist zum Laden und Entladen der Platte (P) auf der Arbeitsebene (1), wobei das besagte Lade- und Entladesystem (S) **dadurch gekennzeichnet ist, dass** es einen Schlitten (4) umfasst, der in der Lage ist, die besagte Basis (3) entlang der besagten ersten Richtung (X) zu bewegen, und dadurch, dass es eine vertikale Stange (5) umfasst, die sich hauptsächlich entlang einer dritten Richtung (Z) entwickelt, orthogonal in Bezug auf die besagte Arbeitsebene (1), verschiebbar gekoppelt mit dem besagten Schlitten (4) und in der Lage, sich entlang der besagten zweiten Richtung (Y) zu verschieben.

6. System (S) nach dem vorhergehenden Anspruch, **dadurch gekennzeichnet, dass** die besagte Basis (3) einen Raum unmittelbar neben der besagten Bearbeitungsebene (1) einnimmt, um einen Teil der von der besagten Arbeitseinheit (2) überstrichenen Fläche während der Bewegung entlang der besagten Arbeitsebene (1) zu besetzen.

7. System (S) nach dem vorhergehenden Anspruch, **dadurch gekennzeichnet, dass** die besagte Aufnahmevorrichtung (6) verschiebbar und drehbar mit der besagten vertikalen Stange (5) gekoppelt ist.

8. System (S) nach dem vorhergehenden Anspruch, **dadurch gekennzeichnet, dass** die besagte Aufnahmevorrichtung (6) einen Teleskoparm (62) umfasst, der in der Lage ist, sich selbst entlang einer Achse parallel zur besagten Entwicklungsachse der besagten vertikalen Stange (5) anzuordnen, und dadurch, dass die besagte Aufnahmevorrichtung (6) ein Aufnahmeelement umfasst (63), gekoppelt mit dem besagten Teleskoparm (62), das in der Lage ist, die besagte Platte (P) während der Anordnung des besagten Teleskoparms (62) entlang der besagten Achse parallel zu der Entwicklungsachse der vertikalen Stange (5) festzuhalten.

9. System (S) nach dem vorhergehenden Anspruch, **dadurch gekennzeichnet, dass** das besagte Aufnahmeelement (63) umfasst eine Stützstruktur (64), ein erstes (65) und ein zweites (66) Aufnahmeelement, die verschiebbar mit der besagten Stützstruktur (64) gekoppelt sind und sich dabei aneinander annähern und voneinander wegbewegen.

10. System (S) nach dem vorhergehenden Anspruch, **dadurch gekennzeichnet, dass** jedes Aufnahmeelement (65, 66) umfasst eine erste Vielzahl von Saugnäpfen (651), die in der Lage sind, die besagte Platte (P) gemäß einer vorbestimmten Ausrichtung abzufangen, eine zweite Vielzahl von Saugnäpfen (652), die in der Lage sind, die besagte Platte (P) nach dem Aufnehmen durch die besagte erste Vielzahl von Saugnäpfen (651) zu befestigen, und ein Druckelement (653), das in der Lage ist, die besagte Platte (P) von der zweiten Vielzahl von Saugnäpfen (652) zu lösen.

11. Betriebsverfahren eines Bearbeitungszentrums (C) nach einem der vorhergehenden Ansprüche 1-4, umfassend ein Be- und Entladesystem (S) nach einem der Ansprüche 5-10, die folgenden Schritte umfassend:
a. Bereitstellen des Lade- und Entladesystems (S) zum Aufnehmen einer Platte (P) aus dem Ladebereich (Z_{c}) des besagten Bearbeitungszentrums (C), in dem sie auf einer Aufnahmeebene parallel zum Boden angeordnet ist;
b. Anordnen der besagten Platte (P) entlang einer Ebene senkrecht zur besagten Aufnahmeebene;
c. Bewegen der besagten Platte (P) in Richtung auf das besagte Bearbeitungszentrum (C) auf der besagten Arbeitsebene (1);
d. Anordnen der besagten Platte (P) entlang einer Ebene parallel zum Boden;
e. Entladen der besagten Platte (P) auf der besagten Arbeitsebene (1);
f. Ausführen einer Bearbeitung an besagter Platte (P);
g. Entladen der besagten Platte (P) von der besagten Arbeitsebene (1);
h. Anordnen der besagten Platte (P) entlang einer Ebene senkrecht zur besagten Arbeitsebene (1);
i. Bewegen der besagten Platte (P) in Richtung auf besagte Entladezone (Zₛ) des besagten Bearbeitungszentrums (C);
j. Anordnen der besagten Platte (P) entlang einer Ebene parallel zur besagten Aufnahmeebene;
k. Entladen der besagten Platte (P) in Richtung auf besagte Entladezone (Zₛ) des besagten Bearbeitungszentrums (C).

## Revendications

1. Un centre de travail (C) pour travailler au moins un panneau (P), fait de bois, plastique, métal, céramique, fibre de verre, verre, comprend un plan de travail (1) s'étendant le long d'une première direction (X) pour soutenir au moins ledit panneau (P), une unité de travail (2) mobile le long de ladite surface de travail (1), capable de soutenir au moins un outil de travail pour travailler au moins ledit panneau (P), un système de chargement et de déchargement (S), capable de charger au moins un panneau (P) dans ledit centre de travail (C) et dudit déchargement du panneau (P) à partir dudit centre de travail (C), ledit système de chargement et de déchargement (S) comprend une base (3) s'étendant le long de ladite première direction (X), parallèle audit plan de travail (1), et un dispositif de ramassage (6) dudit panneau (P) mobile en ce qui concerne ladite base (3) soit le long de ladite première direction (X) ou le long d'une seconde direction (Y), orthogonale de ladite première direction (X), ladite base (3) et ledit dispositif de ramassage (6) étant configurés mutuellement de manière à ce que le système de chargement et le déchargement (S) soit capable d'atteindre tous les domaines de ladite surface de travail (1) qui ne sont pas occupés par l'unité de travail (2), lors du travail dudit panneau (P) par ladite unité de travail (2), ledit centre de travail (C) étant **caractérisé par le fait que** ledit système de chargement et de déchargement (S) comprend également une glissière (4) capable de traduire le long de ladite base (3) le long de ladite première direction (X), et dans **le fait que** le système de chargement et de déchargement (S) comprend également une tige verticale (5) s'étendant le long d'une troisième direction (Z), orthogonale par rapport à ladite surface de travail (1), couplé de manière coulissante avec ladite glissière (4) et capable de bouger le long de ladite seconde direction (Y).

2. Ledit centre de travail (C) selon les revendications précédentes est **caractérisé par le fait que** dans ladite base (3) occupe un espace immédiatement adjacent à ladite surface de travail (1), afin d'occuper une partie de la zone balayée par ladite unité de travail (2) lors du mouvement le long de ladite surface de travail (1).

3. Ledit centre de travail (C) selon l'une quelconque des revendications quelconques est **caractérisé par le fait que** le dispositif de ramassage (6) est couplé de manière rotative et glissante avec ladite tige verticale (5) .

4. Ledit centre de travail (C) selon les revendications précédentes, est **caractérisé par** ledit dispositif de ramassage (6) qui comprend un bras télescopique (62) capable de s'arranger lui-même le long d'un axe parallèle à la troisième direction (Z), et par le fait que le dispositif de ramassage (6) comprend un membre de l'équipe de ramassage (63), couplé audit bras télescopique (62), capable de maintenir ledit panneau (P) lors de la disposition dudit bras télescopique (62) le long dudit axe parallèle audit axe de développement de ladite tige verticale (5).

5. Le système (S) de chargement et de déchargement, est capable de charger au moins un panneau (P), fait de bois, plastique, métal, céramique, fibre de verre, verre, pour un centre de travail (C) et décharger ledit panneau (P) à partir du centre de travail (C), ledit centre de travail (C) étant du type comprenant une surface de travail (1) s'étendant le long d'une première direction (X) pour soutenir au moins un panneau (P), une unité de travail (2) mobile le long de ladite surface de travail (1), capable de soutenir au moins un outil de travail pour travailler au moins ledit panneau (P), comprenant une base (3) s'étendant le long de ladite direction (X), parallèle à ladite surface de travail (1), un dispositif de ramassage (6) dudit panneau (P) mobile par rapport à ladite base (3) soit le long de ladite direction (X) ou le long d'une seconde direction (Y), orthogonale à ladite première direction (X) capable de charger et de décharger ledit panneau (P) sur ladite surface de travail (1), ledit système de chargement et de déchargement (S) étant **caractérisé par le fait qu'**il comprend une glissière (4) capable de bouger ladite base (3) le long de la première direction (X), et **par le fait qu'**il comprend une tige verticale (5) qui développe principalement le long d'une troisième direction (Z), orthogonale par rapport à ladite surface de travail (1), couplé de manière glissante à ladite glissière (4) et capable de se déplacer le long de ladite seconde direction (Y).

6. Le système (S) selon l'une quelconque des revendications précédentes est **caractérisé par le fait que** ladite base (3) occupe un espace immédiatement adjacent à ladite surface de travail (1), afin d'occuper une partie d'une zone balayée par ladite unité de travail (2) lors du mouvement le long de ladite surface de travail (1).

7. Le système (S) selon l'une quelconque des revendications précédentes est **caractérisé par le fait que** ledit dispositif de ramassage (6) est couplé de manière glissante et rotative avec ladite tige verticale (5) .

8. Ledit système (S) selon les revendications précédentes, est **caractérisé par le fait que** ledit dispositif de ramassage (6) comprend un bras télescopique (62) capable de s'arranger le long d'un axe parallèle vers ledit axe de développement de ladite tige verticale (5), et **par le fait que** le dispositif de ramassage (6) comprend un élément de ramassage (63), couplé audit bras télescopique (62), capable de maintenir ledit panneau (P) lors de la disposition dudit bras télescopique (62) le long dudit axe parallèle audit axe de développement de ladite tige verticale (5).

9. Le système (S) selon l'une quelconque des revendications précédentes est **caractérisé par le fait que** l'élément de ramassage (63) comprend une structure de soutien (64), un premier (65) et un second (66) élément de ramassage couplé de manière coulissante avec ladite structure de support (64) approchant et se déplaçant l'un de l'autre.

10. Ledit système (S) selon les revendications précédentes est **caractérisé par** l'élément de ramassage (65, 66) comprend une première pluralité de ventouses (651), capable d'intercepter ledit panneau (P) selon une orientation prédéterminée une seconde pluralité de ventouses (652), capable de fixer ledit panneau (P) après le ramassage de ladite première pluralité de ventouses (651), et un élément de pression (653), capable de détacher ledit panneau (P) à partir de ladite seconde pluralité de ventouses (652).

11. Une méthode de fonctionnement d'un centre de travail (C), selon l'une quelconque des revendications 1-4 comprenant un système (S) de chargement et de déchargement, selon l'une quelconque des revendications 5-10, comprenant les étapes suivantes:
a. fournir ledit système (S) de chargement et de déchargement pour ramasser un panneau (P) à partir de ladite zone de chargement (Z_{c}) dudit centre de travail (C), dans lequel il est disposé sur une surface plane de ramassage, parallèle au sol;
b. disposer ledit panneau (P) le long d'un plan perpendiculaire audit plan de ramassage;
c. déplacer ledit panneau (P) vers ladite surface de travail (1) dudit centre de travail (C);
d. disposer ledit panneau (P) le long d'un plan parallèle vers le sol;
e. décharger ledit panneau (P) sur ledit plan de travail (1) ;
f. réaliser un travail sur ledit panneau (P);
g. ramasser ledit panneau (P) à partir dudit plan de travail (1);
h. organiser ledit panneau (P) le long d'un plan perpendiculaire audit plan de travail (1);
i. déplacer ledit panneau (P) vers la zone de déchargement (Zₛ) dudit centre de travail (C);
j. disposer ledit panneau (P) le long d'un plan parallèle vers ledit plan de ramassage;
k. décharger ledit panneau (P) dans la zone de déchargement (Zₛ) dudit centre (C) de travail.
